# EUROPÄISCHE PATENTSCHRIFT

(11) **EP 1 168 120 B1**
(45) Veröffentlichungstag und Bekanntmachung des Hinweises auf die Patenterteilung: **09.08.2006**
(21) Anmeldenummer: 01113588.6
(22) Anmeldetag: 15.06.2001
(51) Int. Cl.: G05B 19/042, G05B 19/414, G05B 19/408

(54) **Verfahren und Vorrichtung zur seriellen Datenübertragung zwischen einem Positionsmesssystem und einer Verarbeitungseinheit**
Method and device for serial data transmission between a position measuring system and a processing unit
Méthode et dispositif de transmission sérielle de données entre un système de mesure de position et un unité de traitement

(30) Priorität: 21.06.2000 DE 10030358
(43) Veröffentlichungstag der Anmeldung: 02.01.2002
(60) Teilanmeldung: 06009502.3
(73) Patentinhaber: Dr. Johannes Heidenhain GmbH, 83292 Traunreut (DE)
(72) Erfinder: Wastlhuber, Robert, 84518 Garching/Alz (DE); Strasser, Erich, 83308 Trostberg (DE); Eisenberger, Christian, 83324 Ruhpolding (DE); Bratzdrum, Erwin, 83359 Hallabruck (DE)

(56) Entgegenhaltungen:
- US-A- 5 371 859
- KENNEL R ET AL: "DATENKOMMUNIKATION UEBER DAS BUSSYSTEM SERCOS INTERFACE" AUTOMATISIERUNGSTECHNISCHE PRAXIS - ATP, OLDENBOURG VERLAG. MUNCHEN, DE, Bd. 33, Nr. 7, 1. Juli 1991 (1991-07-01), Seiten 363-368, XP000243095 ISSN: 0178-2320

## Beschreibung

Die vorliegende Erfindung betrifft ein Verfahren zur seriellen Datenübertragung zwischen einem Positionsmesssystem und einer Verarbeitungseinheit nach dem Oberbegriff des Anspruches 1. Ferner betrifft die vorliegende Erfindung eine Vorrichtung zur seriellen Datenübertragung zwischen einem Positionsmesssystem und einer Verarbeitungseinheit nach dem Oberbegriff des Anspruches 12.

Ein gattungsgemäßes Verfahren bzw. eine gattungsgemäße Vorrichtung ist aus der EP 0 660 209 B1 der Anmelderin bekannt. In dieser Druckschrift wird die bidirektionale, serielle Übertragung von Positionsdaten und weiteren Daten bzw. Zusatzdaten zwischen einem Positionsmesssystem und einer nachgeordneten Verarbeitungseinheit auf einer Datenleitung vorgeschlagen. Als weitere Daten werden beispielsweise spezifische Parameter des jeweiligen Positionsmesssystems ausgetauscht, wie Daten bzgl. des Messsystem-Typs, der Signalperiode, der Referenzmarkenlage uvm.. Sowohl die Positionsdaten als auch die weiteren Daten werden über die Datenleitung als digitale Datenwörter übertragen. Die Übertragung von Positionsdaten oder weiteren Daten an die Verarbeitungseinheit erfolgt jeweils auf einen entsprechenden Anforderungsbefehl der Verarbeitungseinheit hin. Im Fall der angeforderten Übertragung umfangreicher Zusatzdaten hat dies zur Folge, dass während der Übertragung dieser Daten auf Seiten der Verarbeitungseinheit keine Positionsdaten zur Verfügung stehen. Für eine ggf. geforderte hochdynamische digitale Regelung auf Basis der Positionsdaten des Positionsmesssystems können sich aufgrund des starren Übertragungsrasters und der daraus resultierenden beschränkten Übertragungsgeschwindigkeit Probleme ergeben.

Aufgabe der vorliegenden Erfindung ist es daher, ein Verfahren sowie eine Vorrichtung zur seriellen Datenübertragung zwischen einem Positionsmesssystem und einer Verarbeitungseinheit anzugeben, das eine zuverlässige hochdynamische Regelung auf Basis der Positionsdaten des Positionsmesssystems ermöglicht. Des Weiteren soll auch ein ständiger Austausch weiterer Daten zwischen der Verarbeitungseinheit und dem Positionsmesssystem möglich sein.

Diese Aufgabe wird gelöst durch ein Verfahren mit den Merkmalen des Anspruches 1.

Vorteilhafte Ausführungsformen des erfindungsgemäßen Verfahrens ergeben sich aus den Maßnahmen, die in den von Anspruch 1 abhängigen Patentansprüchen aufgeführt sind.

Ferner wird die oben aufgeführte Aufgabe durch eine Vorrichtung mit den Merkmalen des Anspruches 12 gelöst.

Vorteilhafte Ausführungsformen der erfindungsgemäßen Vorrichtung ergeben sich aus den Maßnahmen, die in den von Anspruch 12 abhängigen Patentansprüchen aufgeführt sind.

Die erfindungsgemäßen Maßnahmen gewährleisten nunmehr, dass auch im Fall schneller Regelungszyklen aktuelle Positionsdaten des Positionsmesssystems auf Seiten der Verarbeitungseinheit zur Verfügung stehen. Des Weiteren ist der neben der Übertragung von Positionsdaten auch der Austausch weiterer Daten zwischen Verarbeitungseinheit und Positionsmesssystem möglich. Dies kann sichergestellt werden, da auch im Fall hochdynamischer Regelungen der Datenaustausch nicht ausschließlich in der Übertragung von Positionsdaten besteht. Erfindungsgemäß werden deshalb die zu übertragenden Daten in zeitkritische Daten und zeitunkritische Daten aufgeteilt. Insbesondere die Positionsdaten sowie die zugehörigen Positions-Anforderungsbefehle stellen dabei zeitkritische Daten dar, die insbesondere für eine schnelle Lageregelung erforderlich sind; die weiteren Daten in Form von Zusatzdaten und Zusatzdaten-Befehlen hingegen stellen zeitunkritische Informationen dar, deren Verarbeitung in deutlich größeren Zykluszeiten möglich ist. Ferner wird anstelle eines starren Anforderungs-Anwort-Übertragungsrasters nunmehr lediglich sichergestellt, dass die Positions-Anforderungsbefehle und die Positionsdaten reaktionsschnell auf Seiten des Positionsmesssystems bzw. der Verarbeitungseinheit zur Verfügung stehen. Es ist nicht mehr zwingend, dass auf einen Zusatzdaten-Befehl unmittelbar im Gegenzug die angeforderten Zusatzdaten übertragen werden. Die Übertragung der angeforderten Zusatzdaten kann vielmehr auch deutlich später erfolgen. Hierbei ist lediglich sicherzustellen, dass die später übertragenen Daten zu dieser Anforderung auf Seiten der Verarbeitungseinheit eindeutig identifizierbar sind bzw. zugeordnet werden können. Es ist erfindungsgemäß auch möglich, die zu einer Anfrage gehörenden Zusatzdaten in mehreren, zeitlich nicht-zusammenhängenden Zusatzdaten-Blöcken zu übertragen.

Als weiterer Vorteil der vorliegenden Erfindung ist anzuführen, dass prinzipiell jederzeit über einen entsprechenden Positionsdaten-Anforderungsbefehl die aktuellen Positionsdaten vom Positionsmesssystem an die Auswerteeinheit übertragbar sind. Dies ist kann beispielsweise auch im Fall der aktuellen Übertragung zeitunkritischer Daten, die gerade als kontinuierlicher Datenstrom übertragen werden. Bei der angeforderten Übertragung aktueller Positionsdaten ist dieser Datenstrom jederzeit unterbrechbar; nach der angeforderten Übertragung der zeitkritischen Positionsdaten läuft anschließend wieder die Übertragung der zeitunkritischen Daten weiter etc..

Es ist möglich die vorliegende Erfindung in einer ersten Variante derart auszubilden, dass die Übertragung aller Daten über einen einzigen, gemeinsamen Datenkanal erfolgt, d.h. einen Halbduplex-Betrieb vorzusehen. Alternativ ist es jedoch ebenso möglich, für jede Übertragungsrichtung einen separaten Datenkanal vorzusehen, d.h. zwei getrennte Datenkanäle für einen Vollduplex-Betrieb einzusetzen.

Vorteilhaft ist ferner, dass verschiedene Positionsdaten-Anforderungsbefehle existieren können, denen unterschiedliche Abarbeitungsprioritäten zugeordnet werden. So ist es z.B. möglich, mit höchster Priorität die Übertragung von aktuellen Positionsdaten an die Verarbeitungseinrichtung anzufordern, die dort zur hochdynamischen Positionsregelung genutzt werden. Mit niedrigerer Abarbeitungspriorität kann ein zweiter Positionsdaten-Anforderungsbefehl vorgesehen werden, der die Übertragung der aktuellen Positionsdaten an die Verarbeitungseinrichtung anfordert, die dort zur Digitalisierung einer Werkstückkontur verwendet wird. Ein derartiger Positionsdaten-Anforderungsbefehl kann z.B. durch den Antastimpuls eines Tastsystems ausgelöst werden, mit dem ein Werkstück abgetastet wird. Grundsätzlich kann auch die Übertragung von Positionsdaten mit niedrigeren Abarbeitungsprioritäten durch Positionsdaten-Anforderungsbefehle mit höheren Abarbeitungsprioritäten unterbrochen werden.

Insgesamt gewährleisten die erfindungsgemäßen Maßnahmen somit eine Übertragung von Positionsdaten an die Verarbeitungseinheit mit hoher Geschwindigkeit bzw. mit höchster Priorität derselben. Gleichzeitig ist jedoch auch die Übertragung weiterer zeitunkritischer Daten im Rahmen der seriellen Datenübertragung möglich. Des Weiteren ist zu erwähnen, dass dies mit einem geringen Aufwand im Hinblick auf die erforderliche Verkabelung möglich ist.

Die vorliegende Erfindung ist ferner unabhängig von der physikalischen Ausbildung einer entsprechenden Schnittstelle und kann auf Basis verschiedenster Schnittstellenkonzepte realisiert werden.

Weitere Vorteile sowie Einzelheiten der vorliegenden Erfindung ergeben sich aus der nachfolgenden Beschreibung der beiliegenden Figuren.

Dabei zeigt
- Figur 1: eine schematisierte Darstellung eines Teiles eines Übertragungsprotokolles zur Erläuterung einer ersten Variante des erfindungsgemäßen Verfahrens;
- Figur 2a - 2d: jeweils in schematischer Form den grundsätzlichen Aufbau verschiedener zeitkritischer und zeitunkritischer Datenwörter;
- Figur 3a - 3c: anhand von zwei Beispielen den zeitlichen Ablauf der Datenübertragung von der Auswerteeinheit zum Positionsmesssystem im Fall einer Anforderung von Positionsdaten während der laufenden Übertragung zeitunkritischer Daten;
- Figur 4: eine schematisierte Darstellung eines Teiles des Übertragungsprotokolles zur Erläuterung einer zweiten Variante des erfindungsgemäßen Verfahrens;
- Figur 5: ein stark schematisiertes Blockschaltbild einer Ausführungsform der erfindungsgemäßen Vorrichtung.

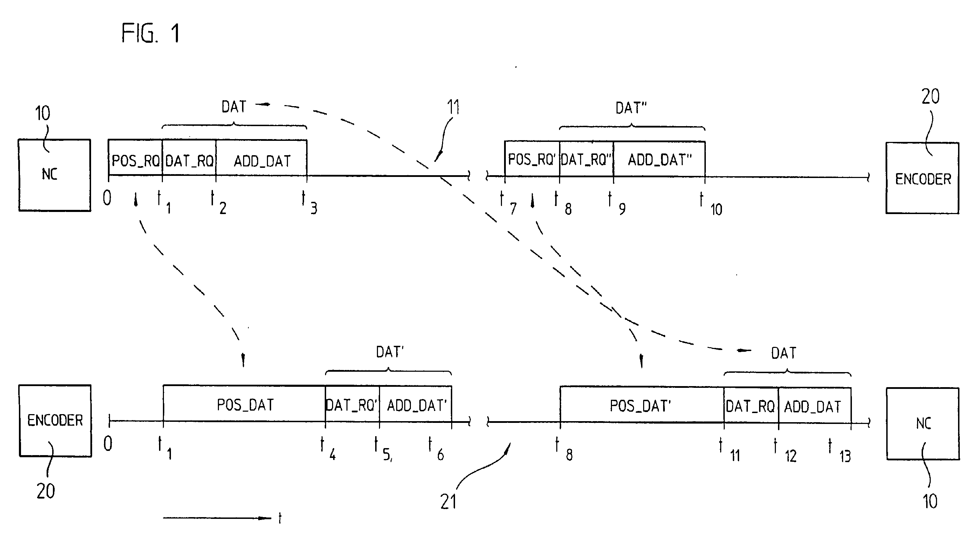

Anhand von Figur 1 sei nachfolgend eine erste Ausführungsform des erfindungsgemäßen Verfahrens bzw. der erfindungsgemäßen Vorrichtung erläutert. Dargestellt ist in Figur 1 in schematischer Form hierbei ein zeitlicher Ausschnitt aus der seriellen Datenübertragung zwischen einem Positionsmesssystem (ENCODER) 20 und einer Verarbeitungseinheit (NC) 10. Im oberen Teil der Figur 1 sind die von der Verarbeitungseinheit 10 an das Positionsmesssystem übertragenen Daten dargestellt; im unteren Teil der Figur 1 sind die im gleichen Zeitintervall vom Positionsmesssystem 20 an die Verarbeitungseinheit 20 übertragenen Daten dargestellt. Als Positionsmesssystem 20 kann z.B. ein bekanntes absolutes oder inkrementales Messsystem vorgesehen sein, welches an einer Werkzeugmaschine zur hochpräzisen Erfassung der Position eines Maschinenteiles dienen. Als Verarbeitungseinheit 10 fungiert in diesem Fall dann eine übliche numerische Werkzeugmaschinensteuerung, die auf Basis der erhaltenen Daten die Werkstückbearbeitung steuert bzw. kontrolliert.

Anhand des in Figur 1 dargestellten ersten Ausführungsbeispiels wird nachfolgend eine Vollduplex-Variante der vorliegenden Erfindung erläutert. Dies bedeutet, dass zwei separate Datenkanäle 11, 21 zur Datenübertragung vorgesehen sind. Ein erster Datenkanal 21 dient zur seriellen Übertragung von Daten vom Positionsmesssystem 20 zur Verarbeitungseinheit 10; ein zweiter Datenkanal 11 ist zur seriellen Übertragung von Daten von der Verarbeitungseinheit 10 zum Positionsmesssystem 20 hin vorgesehen. Die jeweiligen Daten werden in bekannter Art und Weise als digitale Datenwörter mit vorgegebener Größe in den beiden Datenkanälen 11, 21 übertragen. In einer möglichen Ausführungsform erfolgt die Übertragung von Datenwörtern mit einer Wortlänge von 10 Bit.

Im Zusammenhang mit den beiden Datenkanälen 11, 21 sei an dieser Stelle darauf hingewiesen, dass es im Rahmen der vorliegenden Erfindung nicht weiter wesentlich ist, wie diese physikalisch tatsächlich ausgebildet sind. Es ist vielmehr möglich, die vorliegende Erfindung auf Basis physikalisch unterschiedlicher serieller Schnittstellenkonzepte zu realisieren.
In einer möglichen Ausführungsform sind zwei separate Datenkanäle vorgesehen, die jeweils als verdrillte Zweidraht-Leitungen ausgebildet sind, über die die jeweiligen Daten als Takt- und Gegentaktsignale übertragen werden.

Gleichzeitig erfolgt über diese Leitungen auch die Spannungs- und Stromversorgung der Positionsmesssystems.
Alternativ hierzu wäre aber auch möglich, das Positionsmesssystem über separate Leitungen zu versorgen; ebenso wäre eine Datenübertragung über Lichtwellenleiter denkbar usw..

Im dargestellten zeitlichen Ausschnitt des Datenaustausches zwischen der Verarbeitungseinheit 10 und dem Positionsmesssystem 20 übermittelt zum Zeitpunkt t = 0 die Verarbeitungseinheit 10 einen Positions-Anforderungsbefehl POS_RQ über den zweiten Datenkanal 11 an das Positionsmesssystem 20. Ein derartiger Positions-Anforderungsbefehl POS_RQ kann etwa durch ein Positions-Anforderungssignal der Positionsregelung ausgelöst werden. An die darauf erfolgende Übertragung des Positions-Anforderungsbefehl POS_RQ durch die Verarbeitungseinheit 20 schließt sich auf dem zweiten Datenkanal 11 umgehend die Übertragung weiterer Daten DAT an, beginnend zum Zeitpunkt t = t₁ und beendet zum Zeitpunkt t = t₃.

Wichtig ist im Rahmen der vorliegenden Erfindung nunmehr, dass die Verarbeitung der auf den Positions-Anforderungsbefehl POS_RQ folgend übertragenen weiteren Daten DAT auf der jeweiligen Gegenseite zeitunkritisch ist. Dies bedeutet, dass eine Bearbeitung dieser weiteren Daten DAT und/oder eine entsprechende Antwort hierauf nicht unmittelbar nach der Übertragung derselben erfolgen muss, sondern auch mit einem bestimmten zeitlichen Versatz Δt erfolgen kann. Mit höchster zeitlicher Priorität erfolgt hingegen die Verarbeitung bzw. Bearbeitung des zuerst übertragenen Positions-Anforderungsbefehls POS_RQ. Das Positionsmesssystem 10 beginnt demzufolge nahezu unmittelbar bzw. so schnell wie möglich nach dem Empfang des Positions-Anforderungsbefehls POS_RQ zum Zeitpunkt t = t₁ auf dem ersten Datenkanal 21 mit der Übertragung der Positionsdaten POS_DAT; beispielsweise wird hierbei die aktuelle Absolutposition als digitales Datenwort an die Verarbeitungseinheit 10 übertragen. Zum Zeitpunkt t = t₄ ist die Übertragung der Positionsdaten POS_DAT abgeschlossen, anschließend erfolgt auch auf dem ersten Datenkanal 21 analog zum zweiten Datenkanal 11 die Übertragung weiterer Daten DAT', deren Verarbeitung auf der Gegenseite wiederum zeitlich unkritisch ist.

Im Rahmen des Übertragungsschemas der vorliegenden Erfindung erfolgt somit eine Aufteilung der übertragenen Daten zwischen dem Positionsmesssystem 20 und der Verarbeitungseinheit 10 in zeitkritische Daten und Befehle einerseits und zeitunkritische Daten und Befehle andererseits. Die Übertragung zeitkritischer Daten bzw. die Abarbeitung von Befehlen im Zusammenhang mit zeitkritischen Daten hat hierbei immer Vorrang vor der Übertragung bzw. Abarbeitung zeitunkritischer Daten und Befehle.
Als zeitkritische sind diejenigen Daten und Befehle zu betrachten, die im unmittelbaren Zusammenhang mit der aktuell erfassten Position des Positionsmesssystems 20 stehen und die auf Seiten der Verarbeitungseinheit 10 für eine hochdynamische Regelung schnell zur Verfügung stehen müssen. Im einzelnen handelt es sich im vorliegenden Beispiel um die von der Verarbeitungseinheit 10 übertragenen Positions-Anforderungsbefehle POS_RQ sowie die als Antwort vom Positionsmesssystem 20 hierauf übertragenen Positionsdaten POS_DAT. Als Positionsdaten POS_DAT können sowohl Absolutpositionsdaten als auch Inkrementalpositionsdaten übertragen werden.
Als zeitunkritische sind hingegen diejenigen ausgetauschten Daten und Befehle zu betrachten, die nicht im unmittelbaren Zusammenhang mit den aktuellen Positionsdaten stehen, wie beispielsweise Daten und/oder Parameter des Positionsmesssystems, Referenzierungsinformationen; TemperaturMesswerte, Diagnosedaten uvm.. Im einzelnen wird auf diese Art der übertragenen zeitunkritischen Daten DAT, DAT' nachfolgend noch weiter eingegangen. Im Zusammenhang mit den weiteren zeitunkritischen Daten DAT, DAT' ist anzuführen, dass etwa auf einen eventuellen Befehl im Zusammenhang mit diesen Daten grundsätzlich nicht nötig ist, dass der entsprechende Befehl umgehend abgearbeitet wird; es ist vielmehr auch möglich, dass eine Bearbeitung dieses Befehles später erfolgen kann.
Im vorliegenden Beispiel umfassen die ausgetauschten zeitunkritischen Daten DAT, DAT' bis zum Zeitpunkt t = t₆ im einzelnen die Zusatzdaten ADD_DAT, ADD_DAT' sowie die Zusatzdaten-Befehle DAT_RQ, DAT_RQ'.

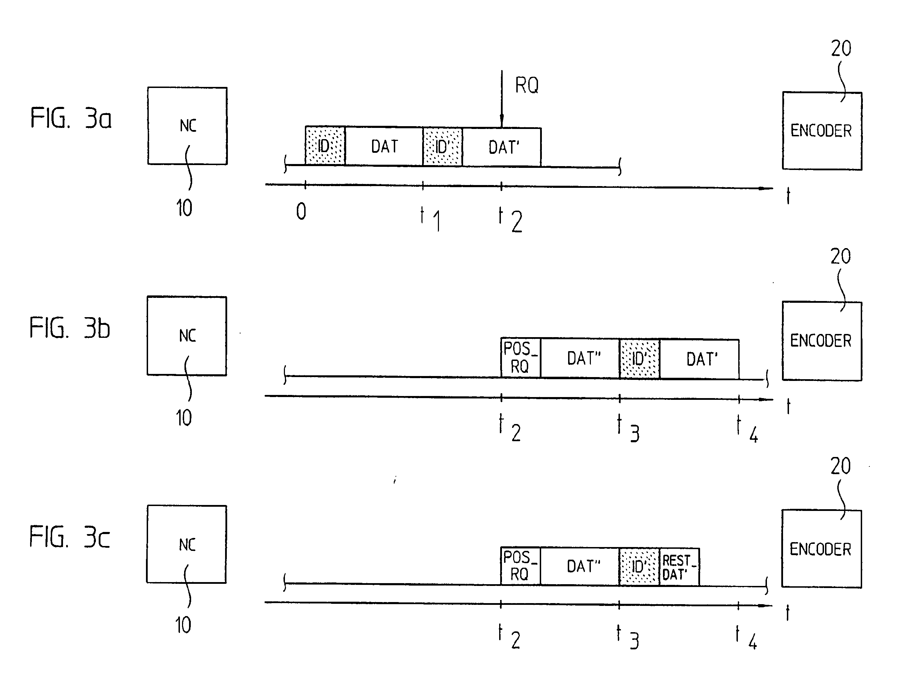

Aufgrund einer derartigen Aufteilung der ausgetauschten Daten ist es auch möglich, dass eine laufende Übertragung zeitunkritischer Daten DAT, DAT' vom Positionsmesssystem 20 zur Verarbeitungseinheit 10 in Form eines kontinuierlichen Datenstromes durch einen Positions-Anforderungsbefehl POS_RQ von der Verarbeitungseinheit 10 unterbrochen wird und nahezu umgehend auf diesen Positions-Anforderungsbefehl POS_RQ eine Übertragung von aktuellen Positionsdaten POS_DAT an die Verarbeitungseinheit 10 erfolgt. Die derart unterbrochene Übertragung zeitunkritischer Daten DAT, DAT' wird zu einem späteren Zeitpunkt fertig gestellt. Das entsprechende Vorgehen wird im Verlauf der Beschreibung der Figuren 3a - 3c noch eingehend erläutert.

Ebenso ist es auch ohne eine derartige Unterbrechung der Übertragung zeitunkritischer Daten DAT, DAT' möglich, zusammengehörende Daten DAT, DAT' über mehrere Blöcke zeitlich verteilt zu übertragen, die in bestimmten Abständen aufeinander folgen und zwischen denen dann wiederum aktuelle Positionsdaten POS_DAT übertragen werden. Eine derartige Verteilung auf mehrere Blöcke kann etwa im Fall besonders umfangreicher zu übertragender zeitunkritischer Daten DAT nötig bzw. sinnvoll sein.

Im dargestellten Beispiel der Figur 1 werden als zeitunkritische Daten DAT, DAT' folgend auf die jeweiligen zeitkritischen Daten in Form von Positions-Anforderungsbefehl POS_RQ und Positionsdaten POS_DAT jeweils ein Zusatzdatenbefehl DAT_RQ, DAT_RQ' bzw. Zusatzdaten ADD_DAT, ADD_DAT' übertragen. Die weiteren zeitunkritischen Daten DAT, DAT' sind demzufolge im vorliegenden Beispiel in Zusatzdaten ADD_DAT, ADD_DAT' und Zusatzdaten-Befehle DAT_RQ, DAT_RQ' zu unterteilen. Bei den Zusatzdaten-Befehlen DAT_RQ, DAT_RQ' kann es sich beispielsweise um die Anforderung bestimmter Zusatzdaten ADD_DAT, ADD_DAT' von der jeweiligen Gegenseite handeln. So kann etwa die Verarbeitungseinheit 10 über einen entsprechenden Zusatzdaten-Befehl DAT_RQ vom Positionsmesssystem 20 bestimmte Messsystem-Parameter als Zusatzdaten ADD_DAT anfordern etc..

Als Zusatzdaten-Befehle DAT_RQ, DAT_RQ' können neben den erwähnten Anforderungsbefehlen auch noch weitere Befehle vorgesehen sein, beispielsweise Befehle im Zusammenhang mit der Programmierung oder Kalibrierung eines Positionsmesssystems usw..

Im Beispiel der Figur 1 überträgt die Verarbeitungseinheit 10 ab dem Zeitpunkt t = t₁, d.h. nach der Übertragung des Positions-Anforderungsbefehles POS_RQ, einen Zusatzdaten-Befehl DAT_RQ an das Positionsmesssystem 20, mit dem z.B. Zusatzdaten wie die Temperatur T des Positionsmesssystems 20 angefordert werden. Sobald die Übertragung des Zusatzdaten-Befehles DAT_RQ zum Zeitpunkt t = t₂ beendet ist, erfolgt durch die Verarbeitungseinheit 10 die Übertragung von Zusatzdaten ADD_DAT an das Positionsmesssystem 20 bis zum Zeitpunkt t = t₃. Hierbei kann es sich beispielsweise um Programmierungs-Parameter für das Positionsmesssystem 20 handeln.

Das Positionsmesssystem 20 antwortet nach dem Empfang des Positions-Anforderungsbefehles POS_RQ zum Zeitpunkt t = t₁ auf dem anderen Datenkanal 21 mit der unmittelbaren Übertragung der aktuellen Positionsdaten POS_DAT, die im Positionsmesssystem 20 zur Verfügung stehen. Dass es sich bei der Übertragung der Positionsdaten POS_DAT um die unmittelbare Antwort auf den vorhergehenden Positionsdaten-Anforderungsbefehl POS_RQ handelt sei durch die gestrichelte Verbindungslinie in Figur 1 angedeutet.
Sobald die aktuellen Positionsdaten POS_DAT zum Zeitpunkt t = t₄ vollständig übertragen sind, beginnt die Übertragung der zeitunkritischen Daten DAT' vom Positionsmesssystem 20 zur Verarbeitungseinheit 10. Zunächst wird hierbei im Zeitraum zwischen t = t₄ und t = t₅ ein Zusatzdaten-Befehl DAT_RQ' an die Verarbeitungseinheit 10 übertragen, im nachfolgenden Zeitintervall zwischen t = t₅ und t = t₆ erfolgt die Übertragung von Zusatzdaten ADD_DAT'. Wesentlich ist an dieser Stelle, dass es sich bei der Übertragung der Zusatzdaten ADD_DAT' keineswegs um diejenigen Zusatzdaten handeln muss, die unmittelbar vorher von der Verarbeitungseinheit 10 mit dem Zusatzdaten-Befehl DAT_RQ auf dem anderen Datenkanal 11 angefordert wurden; es kann sich vielmehr um Zusatzdaten ADD_DAT' handeln, die bereits lange vorher von der Verarbeitungseinheit 10 angefordert wurden. Analog hierzu kann dann auch die Antwort des Positionsmesssystems 20 auf die Anforderung von Zusatzdaten im Zeitintervall t = t₁ und t = t₂ zu einem deutlich späteren Zeitpunkt t erfolgen. Im dargestellten Beispiel ist zur Erläuterung dieses Prinzips deshalb noch ein zweiter Teil der Zeitachse dargestellt, der ein später folgendes Zeitintervall nach dem ersten Datenaustausch-Intervall zwischen t₁ und t₆ darstellt. Im späteren Zeitintervall zwischen t = t₇ und t = t₁₃ erfolgt hierbei u.a. die Übertragung der zum Zeitpunkt t = t₁ angeforderten Zusatzdaten ADD_DAT. Auch hier ist durch die gestrichelte Verbindungslinie in der Figur 1 zwischen den Zusatzdaten DAT angedeutet, dass diese letztlich zusammengehören. Ansonsten verläuft der Datenaustausch in diesem Zeitintervall prinzipiell wie bereits oben erläutert.

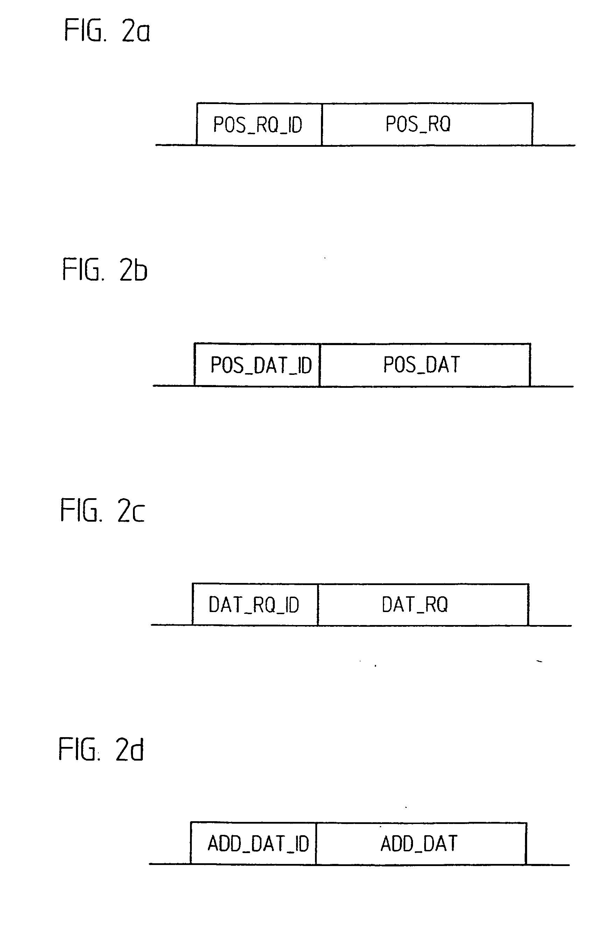

Anhand der Figuren 2a -2d sei nachfolgend die grundsätzliche Struktur der verschiedenen übertragenen digitalen Datenwörter erläutert, die im vorliegenden Beispiel als zeitkritische Daten bzw. zeitunkritische Daten übertragen werden.
Da zwischen der Verarbeitungseinheit und dem Positionsmesssystem auf den beiden Datenkanälen in der Regel ein kontinuierlicher Datenstrom in Form entsprechender digitaler Datenwörter ausgetauscht wird, ist es grundsätzlich erforderlich, die verschiedenen Arten der jeweiligen Datenwörter eindeutig zu identifizieren. Nur dann kann eine korrekte Verarbeitung der unterschiedlichen Datenwörter auf Seiten der Verarbeitungseinheit und des Positionsmesssystems sichergestellt werden. Aus diesem Grund ist vorgesehen vor jedem übertragenen Datenwort oder ggf. Datenpaket eine Identifizierungsinformation in Form einer spezifischen Datenwort-Kennung zu übertragen; über die Datenwort-Kennung wird jeweils der Beginn der nachfolgenden Daten sowie die Art der nachfolgenden Daten eindeutig für die jeweilige Gegenseite identifizierbar. Hierbei kann es sich bei den nachfolgenden Daten um einzelne digitale Datenwörter oder aber Datenpakete, bestehend aus einzelnen digitalen Datenwörtern handeln.
In den Figuren 2a - 2d ist jeweils schematisch veranschaulicht, wie sowohl vor den einzelnen zeitkritischen Daten POS_RQ, POS_DAT und den zeitunkritischen Daten DAT_RQ, ADD_DAT eine Datenwort-Kennung POS_RQ_ID, POS_DAT_ID, DAT_RQ_ID, ADD_DAT_ID übertragen wird. Auf eine Darstellung dieser zusätzlich vor dem jeweiligen Daten übertragenen Datenwort-Kennungen POS_RQ_ID, POS_DAT_ID, DAT_RQ_ID, ADD_DAT_ID wurde in Figur 1 im übrigen aus Übersichtlichkeitsgründen verzichtet. Anhand der jeweiligen Datenwort-Kennungen kann eine korrekte Verarbeitung bzw. Abarbeitung der übertragenen Daten auf beiden Seiten sichergestellt werden.

Da wie oben bereits erläutert, die Übertragung angeforderter zeitunkritischer Zusatzdaten ADD_DAT durchaus in einem größeren zeitlichen Abstand zur jeweiligen Anforderung über den Zusatzdaten-Befehl DAT_RQ erfolgen kann, muss des Weiteren sichergestellt werden, dass die übertragenen Zusatzdaten ADD_DAT auch als Antwort auf eine bestimmte vorhergehende Zusatzdaten-Anforderung erkennbar sind. Aus diesem Grund wird zu Beginn jedes übertragenen Datenwortes ADD_DAT oder ggf. Datenpaketes eine entsprechende Zuordnungsinformation mit den eigentlichen Zusatzdaten übertragen; dies kann etwa in Form einer einfachen Antwort-Nummer erfolgen, wenn der zugehörigen Frage eine entsprechende Frage-Nummer zugeordnet wurde. Selbstverständlich gibt es aber auch andere Möglichkeiten, die Zuordnungsinformationen zu übertragen bzw. eine eindeutige Zuordnung der übertragenen Zusatzdaten zu vorhergehenden Zusatzdaten-Anforderungen sicherzustellen.

Wie bereits oben angedeutet soll nunmehr anhand der Figuren 3a - 3c veranschaulicht werden, wie im Rahmen der vorliegenden Erfindung grundsätzlich zu jeder Zeit eine Unterbrechung eines kontinuierlichen Datenstromes erfolgen kann, in dem gerade zeitunkritische bzw. zeitunkritischere Daten übertragen werden.
Gezeigt ist in Figur 3a die aktuell laufende Übertragung zeitunkritischer Daten DAT, DAT' von der Verarbeitungseinheit (NC) 10 zum Positionsmesssystem (ENCODER) 20. Den entsprechenden zeitunkritischen Daten DAT, DAT' ist wie vorab erläutert jeweils eine zugehörige Datenwort-Kennung DAT_ID, DAT'_ID' vorgeordnet, um die Art der entsprechenden zeitunkritischen Daten DAT, DAT' auf Seiten des Positionsmesssystems 20 eindeutig zu identifizieren.
Während die Übertragung des ersten Blockes zeitunkritischer Daten DAT inklusive Datenwort-Kennung DAT_ID im Zeitintervall zwischen t = t₀ und t = t₁ noch vollständig erfolgt, wird die Übertragung des nachfolgenden Blockes zeitunkritischer Daten DAT' zum Zeitpunkt t = t₂ unterbrochen. Dies erfolgt über das schematisch angedeutete Positions-Anforderungssignal RQ, mit dem z.B. ein Lageregelungskreis in der Verarbeitungseinheit 10 aktuelle Positionsdaten vom Positionsmesssystem 20 anfordert. Unmittelbar nach dem Eintreffen des Positions-Anforderungssignales RQ wird gemäß Figur 3b daher die laufende Übertragung der zeitunrikitschen Daten DAT' abgebrochen und stattdessen ein Positions-Anforderungsbefehl POS_RQ inklusive zugehöriger - nicht dargestellter - Datenwort-Kennung an das Positionsmesssystem 20 übertragen. Das Positionsmesssystem 20 antwortet ebenso umgehend mit der - nicht dargestellten - Übertragung der aktuell erfassten Positionsdaten, wie dies anhand von Figur 1 bereits erläutert wurde. Von der Verarbeitungseinheit 10 werden im Anschluss an die Übertragung des Positions-Anforderungsbefehles POS_RQ im Zeitintervall zwischen t = t₃ und t = t₄ gemäß dem erfindungsgemäßen Übertragungsschema weitere zeitunkritische Daten DAT" an das Positionsmesssystem 20 übertragen. Des Weiteren ist es nunmehr noch erforderlich, die zum Zeitpunkt t = t₂ abgebrochene Übertragung des zeitunkritischen Datenwortes DAT' zu vervollständigen. Gemäß der Variante in Figur 3b erfolgt dies, indem im Zeitintervall zwischen t = t₃ und t = t₄ nochmals vollständig die entsprechenden Daten DAT' inklusive Datenwort-Kennung DAT'_ID' an das Positionsmesssystem 20 übertragen werden.

Alternativ zu diesem Vorgehen wäre es aber - wie in Figur 3c veranschaulicht - möglich, im Zeitintervall zwischen t = t₃ und t = t₄ lediglich den restlichen Teil REST_DAT' der zeitunkritischen Daten DAT' zu übertragen, deren vollständige Übertragung zum Zeitpunkt t = t₂ unterbrochen wurde.

Wie anhand dieses Beispieles erläutert, kann somit zu jeder Zeit ein kontinuierlicher Datenstrom mit zeitunkritischen Daten DAT, DAT' zwischen der Verarbeitungseinheit 10 und dem Positionsmesssystem 20 unterbrochen werden, um zeitkritische Positionsdaten anzufordern, die z.B. für eine hochdynamische Lageregelung erforderlich sind.

Im Rahmen der vorliegenden Erfindung ist es des Weiteren möglich, Positionsdaten POS_DAT zur Verarbeitung in der Verarbeitungseinheit 10 mit bestimmten Abarbeitungsprioritäten vom Positionsmesssystem 20 anzufordern. So können etwa in einer als Werkzeugmaschinensteuerung ausgebildeten Verarbeitungseinheit 10 Positionsdaten einerseits zur Lageregelung und andererseits zur Digitalisierung einer Werkstückkontur benötigt werden. Letzteres erfolgt üblicherweise mit Hilfe eines Tastsystems, das die jeweilige Werkstückkontur abtastet und im Fall eines erzeugten Antastsignales die aktuellen Positionsdaten POS_DAT des Tastsystems an die Verarbeitungseinheit 10 übermittelt. Die aktuellen Positionsdaten werden hierbei über das Positionsmesssystem 20 bestimmt. Während die Positionsdaten POS_DAT für die Lageregelung insbesondere im Fall einer hochdynamischen Regelung äußerst schnell zur Verfügung stehen müssen, ist eine Weiterverarbeitung der Positionsdaten POS_DAT zur Digitalisierung einer Werkstückkontur weniger zeitkritisch. Aus diesem Grund kann in der vorliegenden Erfindung vorgesehen werden, mehrere Positions-Anforderungsbefehle POS_RQⁿ vorzusehen (n = 1, 2....), denen unterschiedliche Abarbeitungsprioritäten zugeordnet sind. So ist beispielsweise ein erster Positions-Anforderungsbefehl POS_RQ¹ vorgesehen, der mit höchster Abarbeitungspriorität eine Übertragung von Positionsdaten POS_DAT an die Verarbeitungseinheit 10 veranlasst, die dort zur Positions- oder Lageregelung verwendet werden. Des Weiteren existiert mindestens ein zweiter Positions-Anforderungsbefehl POS_RQ², der mit niedrigerer Abarbeitungspriorität eine Übertragung der aktuellen Positionsdaten POS_DAT an die Verarbeitungseinheit 10 veranlasst, die dann dort zur Digitalisierung einer Werkstückkontur verwendet werden.

Die den verschiedenen Positions-Anforderungsbefehlen POS_RQⁿ zugewiesenen Abarbeitungsprioritäten haben zur Folge, dass derart eine nochmalige Prioritäts-Differenzierung in der Positionsabfrage bzw. Positionsdaten-Übertragung möglich ist. So kann beispielsweise die gerade laufende Übertragung von Positionsdaten POS_DAT zur Verarbeitungseinheit 10 unterbrochen werden, die dort zur Digitalisierung benötigt werden und vorher mit dem niedrigprioren Positions-Anforderungsbefehl POS_RQ² angefordert wurden. Die Unterbrechung erfolgt hierbei durch den entsprechenden Positions-Anforderungsbefehl POS_RQ¹, der die höchste Abarbeitungspriorität aufweist und eine umgehende Übertragung von Positionsdaten POS_DAT für die Positionsregelung in der Verarbeitungseinheit 10 veranlasst.

Selbstverständlich können auch mehr als zwei Positions-Anforderungsbefehle POS_RQⁿ mit entsprechenden Abarbeitungsprioritäten versehen werden usw..

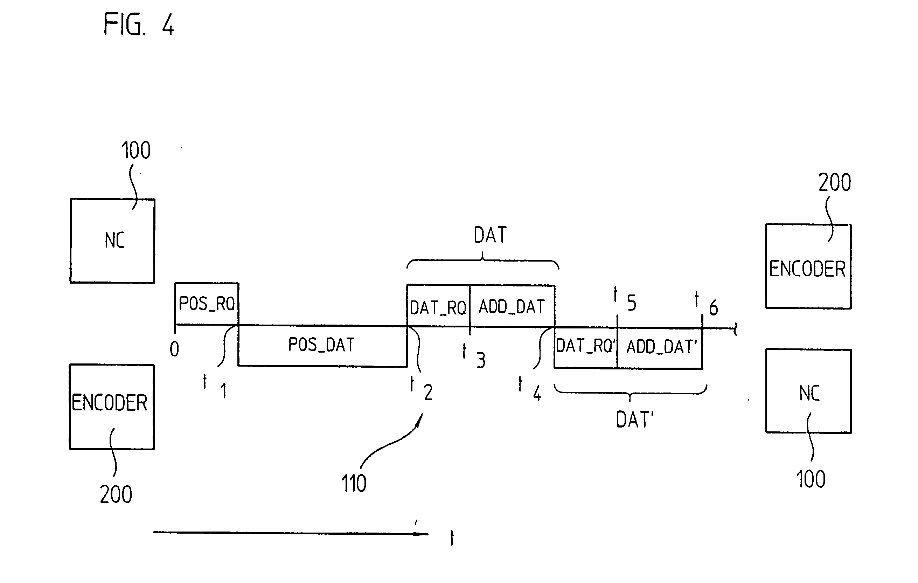

Während im bisher erläuterten Beispiel der Figur 1 eine Vollduplex-Variante der vorliegenden Erfindung mit zwei separaten Datenkanälen 11, 12 erläutert wurde, sei nachfolgend anhand von Figur 4 veranschaulicht, dass auch eine alternative Ausführungsform als Halbduplex-Variante ausgebildet werden kann.
Im Gegensatz zum ersten Beispiel in Figur 1 ist hierbei nur noch ein einziger Datenkanal 110 zwischen dem Positionsmesssystem 200 und der Verarbeitungseinheit 100 vorgesehen. Auf dem Datenkanal 110 werden gemeinsam die Daten vom Positionsmesssystem (ENCODER) 200 zur Verarbeitungseinheit (NC) 100 als auch die Daten von der Verarbeitungseinheit 100 zum Positionsmesssystem 200 übertragen. Aufgrund der gemeinsamen Nutzung eines einzigen Datenkanales 110 resultiert in dieser Ausführungsform ein etwas modifiziertes Übertragungsschema gegenüber dem ersten Beispiel.

Zum Zeitpunkt t = 0 erfolgt wiederum die Übertragung eines Positions-Anforderungsbefehles POS_RQ von der Verarbeitungseinheit 100 an das Positionsmesssystem 200. Dieses antwortet umgehend mit der Übertragung der aktuellen Positionsdaten POS_DAT zwischen den Zeitpunkten t = t₁ und t = t₂. Erst ab dem Zeitpunkt t = t₂, ab dem die Übertragung der Positionsdaten POS_DAT an die Verarbeitungseinheit 100 abgeschlossen ist, erfolgt im Zeitintervall zwischen t = t₂ und t = t₄ die Übertragung der zeitunkritischen, weiteren Daten DAT von der Verarbeitungseinheit 100 an das Positionsmesssystem 200. Im anschließenden Zeitintervall zwischen t = t₄ und t = t₆ antwortet das Positionsmesssystem 200 zum Abschluss dieses Datenübertragungs-Zyklusses schließlich ebenfalls mit der Übertragung weiterer, zeitunkritischer Daten DAT'.

Analog zum obigen Beispiel bestehen die übertragenen zeitunkritischen Daten DAT aus den Zusatzdaten ADD_DAT, ADD_DAT' und den Zusatzdaten-Befehlen DAT_RQ, DAT_RQ'. Aufgrund der gewählten Aufteilung der zu übertragenden Daten in zeitkritische und zeitunkritische, weitere Daten DAT, DAT' ist wiederum sichergestellt, dass auch schnelle Regelungszyklen auf Seiten der Verarbeitungseinheit 100 reaktionsschnell mit den erforderlichen Positionsdaten POS_DAT vom Positionsmesssystem 200 versorgt werden können.

Auch in dieser Variante der vorliegenden Erfindung lassen sich selbstverständlich die oben erläuterten Einzelmaßnahmen realisieren, auf eine wiederholte Beschreibung aller Details wird deshalb an dieser Stelle verzichtet.

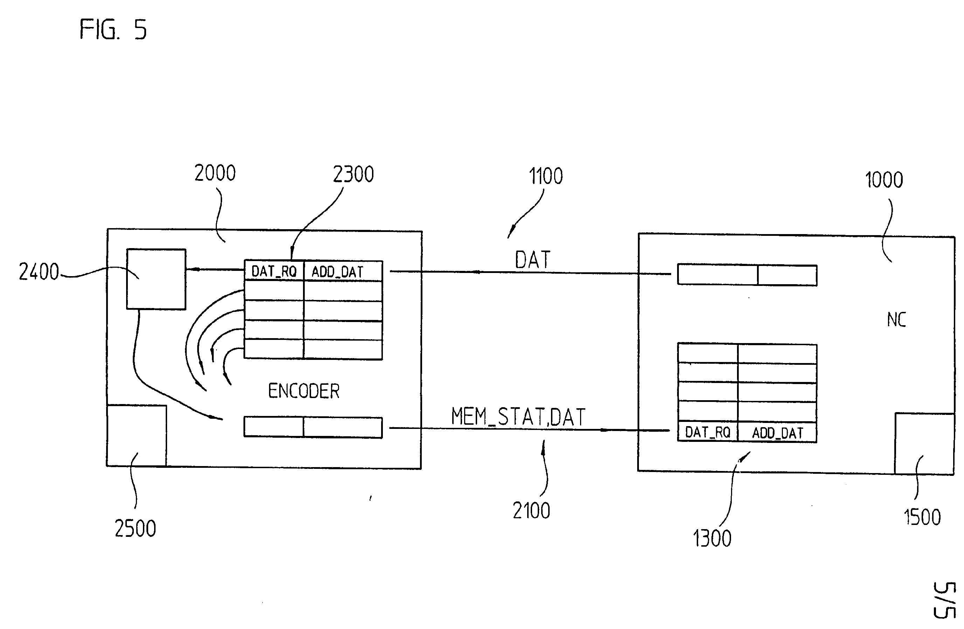

Abschließend seien anhand von Figur 5 nunmehr noch einige Einzelheiten in Bezug auf die erfindungsgemäße Vorrichtung erläutert, die insbesondere im Zusammenhang mit der Übertragung der zeitunkritischen Daten von Bedeutung sind. Figur 3 zeigt hierbei in stark schematisierter Form eine Vollduplex-Variante der erfindungsgemäßen Vorrichtung mit einigen noch näher zu erläuternden Komponenten derselben, die insbesondere für die vorliegende Erfindung relevant sind.

Die erfindungsgemäße Vorrichtung umfasst wiederum ein Positionsmesssystem (ENCODER) 2000 sowie eine nachgeordnete Verarbeitungseinheit (NC) 2000, die abgesehen von den nachfolgend erläuterten Komponenten einen üblichen Aufbau aufweisen. Der Datentransfer zwischen dem Positionsmesssystem 2000 und der Verarbeitungseinheit 1000 erfolgt über zwei separate Datenkanäle 1100, 2100. Über den ersten Datenkanal 2100 werden Daten vom Positionsmesssystem 2000 zur Verarbeitungseinheit 1000 übertragen; auf dem zweiten Datenkanal 1100 erfolgt die Datenübertragung in entgegengesetzter Richtung, d.h. von der Verarbeitungseinheit 1000 zum Positionsmesssystem 2000.

Bevor anschließend auf die Erläuterung weiterer Details im Zusammenhang mit der Übertragung der zeitunkritischen Daten DAT eingegangen wird, sei an dieser Stelle auf eine schematisch angedeutete Steuereinheit 2500 im Positionsmesssystem 2000 hingewiesen. Deren wesentliche Aufgabe ist es, den erfindungsgemäßen Datentransfer wie oben erläutert sowie die interne Verarbeitung der unterschiedlichen Daten im Positionsmesssystem 2000 zu synchronisieren bzw. zu steuern. Bei der Steuereinheit 2500 kann es sich etwa um einen Prozessor oder aber um eine geeignete Logikschaltung handeln.

Analog hierzu umfasst selbstverständlich auch die Verarbeitungseinheit 1000 eine entsprechende Steuereinheit 1500, die u.a. den Datentransfer bzw. die Datenverarbeitung wie oben erläutert steuert. In der Regel ist die Steuereinheit 1500 auf Seiten der Verarbeitungseinheit 1000 als Prozessor ausgebildet.

Auf Seiten des Positionsmesssystems 2000 ist schematisiert ferner eine erste Speichereinheit 2300 dargestellt, die zur Abspeicherung der von der Verarbeitungseinheit 1000 übertragenen zeitunkritischen Daten DAT dient, die wie oben erläutert aus den Zusatzdaten ADD_DAT und den Zusatzdaten-Befehlen DAT_RQ bestehen. Eine derartige Abspeicherung der verschiedenen empfangenen zeitunkritischen Daten DAT ist insofern nötig, als deren Bearbeitung bzw. Abarbeitung in der Regel nicht umgehend erfolgen muss. Die während der Übertragung empfangenen Zusatzdaten ADD_DAT und Zusatzdaten-Befehle DAT_RQ werden daher in der Speichereinheit 2300 im Positionsmesssystem 2000 abgespeichert und je nach Priorität und Zeitaufwand für die Bearbeitung abgearbeitet. Beispielsweise kann es sich hierbei um die Anforderung von Systemparametern des Positionsmesssystems 2000 handeln, die in einem weiteren Speicherbaustein 2400 in Form eines EEPROMS im Positionsmesssystem 2000 abgelegt sind. Die angeforderten Parameter werden aus dem Speicherbaustein 2400 ausgelesen, was im Falle eines EEPROMS in der Regel relativ langsam erfolgt und anschließend über die vorher erläuterte Art und Weise an die Verarbeitungseinheit 1000 übertragen. Parallel hierzu kann auf Seiten des Positionsmesssystems 2000 die Abarbeitung weiterer zeitunkritischer Anfragen bzw. Anforderungen erledigt werden, die allesamt in der Speichereinheit 2300 abgespeichert sind; hierbei kann es sich z.B. um die Abfrage von Temperaturmesswerten, Beschleunigungsmesswerten etc. handeln.

Nach der entsprechenden Abarbeitung werden die zeitunkritischen Daten DAT wie oben beschrieben an die Verarbeitungseinheit 1000 übertragen und dort ebenfalls in einer geeigneten zweiten Speichereinheit 1300 abgespeichert. Die Verarbeitung der Daten in der Speichereinheit 1300 kann dann auch in der Verarbeitungseinheit je nach Dringlichkeit bzw. Priorität dieser Daten über entsprechende Prozesse erfolgen, die in geeigneter Art und Weise softwaremäßig realisiert sind.

Die Speichereinheiten 2300, 1300 auf Seiten des Positionsmesssystems 2000 bzw. der Verarbeitungseinheit 1000 weisen einen Aufbau auf, der der Struktur der übertragenen zeitunkritischen Daten DAT entspricht. Dies bedeutet, dass für jeden übertragenen Datensatz der zeitunkritischen Daten DAT ein erster Speicherbereich für die Zusatzdaten ADD_DAT sowie ein zweiter Speicherbereich für die Zusatzdaten-Befehle DAT_RQ vorgesehen ist. Die entsprechenden Speicherbereiche müssen hinsichtlich ihrer Größe selbstverständlich auf die Größe der entsprechenden Datenwörter der zeitunkritischen Daten DAT abgestimmt werden.

Zu erwähnen ist im Zusammenhang mit den Speichereinheiten 1300, 2300 ferner, dass im Rahmen der erfindungsgemäßen Datenübertragung neben den oben erläuterten Daten des Weiteren noch Speichereinheits-Zustandsdaten MEM_STAT regelmäßig zwischen dem Positionsmesssystem 2000 und der Verarbeitungseinheit 1000 übertragen werden. Hierbei handelt es sich um Informationen in Bezug auf die jeweilige Speichereinheit 1300, 2300. Zumindest umfassen die Speichereinheits-Zustandsdaten MEM_STAT hierbei Informationen bzgl. des aktuellen Speicherzustandes, d.h. etwa ob die jeweilige Speichereinheit 1300, 2300 voll, leer oder teilweise gefüllt ist usw.. Dies ist insbesondere bei der Speichereinheit 2300 des Positionsmesssystems 2000 von Bedeutung, da auf Seiten der Verarbeitungseinheit 1000 im Fall einer vollen Speichereinheit 2300 keine weiteren Daten DAT mehr in Richtung des Positionsmesssystems 2000 übertragen werden können. Aufgrund der regelmäßigen Übertragung der Speichereinheits-Zustandsdaten MEM_STAT kann somit sichergestellt werden, dass die jeweilige Gegenseite keine derartigen Daten DAT mehr überträgt, wenn die entsprechende Speichereinheit 1300, 2300 voll ist.

## Patentansprüche

1. Verfahren zur seriellen Datenübertragung zwischen einem Positionsmesssystem (20; 200; 200) und einer Verarbeitungseinheit (10; 100; 1000), bei dem vom Positionsmesssystem (20; 200; 2000) Positionsdaten (POS_DAT, POS_DAT') und weitere Daten (DAT, DAT') in serieller Form als digitale Datenwörter an die Verarbeitungseinheit (10; 100; 1000) übertragen werden, **dadurch gekennzeichnet, dass** auf einen Positions-Anforderungsbefehl (POS_RQ, POS_RQ') der Verarbeitungseinheit (10; 100; 1000) aktuelle Positionsdaten (POS_DAT, POS_DAT') vom Positionsmesssystem (20; 200; 2000) zur Verarbeitungseinheit (10; 100; 1000) übertragen werden und auf die Positionsdaten (POS_DAT, POS_DAT') folgend weitere Daten (DAT, DAT') vom Positionsmesssystem (20; 200; 2000) an die Verarbeitungseinheit (10; 100; 1000) übertragen werden, deren Verarbeitung zeitunkritisch ist und zusammengehörende weitere Daten (DAT, DAT') über mehrere Blöcke zeitlich verteilt übertragen werden, die in bestimmten Abständen aufeinander folgen.

2. Verfahren nach Anspruch 1, wobei zwischen den zeitlich verteilt übertragenen Blöcken mit zeitunkrititschen Daten (DAT, DAT') aktuelle Positionsdaten (POS_DAT, POS_DAT') übertragen werden.

3. Verfahren nach Anspruch 1, bei dem als zeitunkritische Daten (DAT, DAT') Parameter des Positionsmesssystems (20; 200; 2000) übertragen werden.

4. Verfahren nach Anspruch 1, bei dem als zeitunkritische Daten (DAT, DAT') Temperaturmesswerte übertragen werden.

5. Verfahren nach Anspruch 1, bei dem als zeitunkritische Daten (DAT, DAT') Diagnosedaten des Positionsmesssystems (20; 200; 2000) übertragen werden.

6. Verfahren nach mindestens einem der vorhergehenden Ansprüche, bei dem die vom Positionsmesssystem (20; 2000) zur Verarbeitungseinheit (10; 1000) übertragenen Daten über einen ersten Datenkanal (21; 2100) übertragen werden und die von der Verarbeitungseinheit (10; 1000) an das Positionsmesssystem (20; 2000) übertragenen Daten über einen zweiten Datenkanal (11; 1100) übertragen werden.

7. Verfahren nach mindestens einem der vorhergehenden Ansprüche, bei dem zu jedem übertragenen Datenwort eine Identifizierungsinformation übertragen wird.

8. Verfahren nach mindestens einem der vorhergehenden Ansprüche, bei dem zeitunkritische Daten aus einem Speicherbaustein (2300) des Positionsmesssystems (20; 200; 2000) ausgelesen werden.

9. Verfahren nach mindestens einem Ansprüche 1 - 7, bei dem die an die Verarbeitungseinheit (1000) übertragenen zeitunkritischen Daten in einer Speichereinheit (1300) der Verarbeitungseinheit (1000 abgespeichert werden.

10. Positionsmesssystem, geeignet zur Durchführung eines Verfahrens nach einem der Ansprüche 1-8.

11. Verarbeitungseinheit, geeignet zur Durchführung eines Verfahrens nach einem der Ansprüche 1-7 oder 9.

12. Vorrichtung zur seriellen Datenübertragung zwischen einem Positionsmesssystem (20; 200; 200) und einer Verarbeitungseinheit (10; 100; 1000), bei der eine Übertragung von Positionsdaten (POS_DAT, POS_DAT') und weiterer Daten (DAT, DAT) in serieller Form als digitale Datenwörter vom Positionsmesssystem (20; 200; 2000) an die Verarbeitungseinheit (10; 100; 1000) erfolgt, **dadurch gekennzeichnet, dass** auf Seiten des Positionsmesssystems eine Steuereinheit (2500) angeordnet ist, die auf einen Positions-Anforderungsbefehl (POS_RQ, POS_RQ') der Verarbeitungseinheit (10; 100; 1000) eine Übertragung von aktuellen Positionsdaten (POS_DAT, POS_DAr) vom Positionsmesssystem (20; 200; 2000) zur Verarbeitungseinheit (10; 100; 1000) hin veranlasst und auf die Positionsdaten (POS_DAT, POS_DAT') folgend die weitere Übertragung von Daten (DAT, DAT') vom Positionsmesssystem (20; 200; 2000) an die Verarbeitungseinheit (10; 100; 1000) veranlasst, deren Verarbeitung zeitunkritisch ist und wobei eine Übertragung von zusammengehörenden weiteren Daten (DAT, DAT') über mehrere Blöcke zeitlich verteilt erfolgt, die in bestimmten Abständen aufeinander folgen.

13. Vorrichtung nach Anspruch 12, bei der die Übertragung der vom Positionsmesssystem (20; 2000) zur Verarbeitungseinheit (10; 1000) übertragenen Daten über einen ersten Datenkanal (21; 2100) erfolgt und die Übertragung der von der Verarbeitungseinheit (10; 1000) an das Positionsmesssystem (20; 2000) übertragenen Daten über einen zweiten Datenkanal (11; 1100) erfolgt.

14. Vorrichtung nach Anspruch 12, bei der das Positionsmesssystem (20; 200; 2000) einen Speicherbaustein (2300) umfasst, aus dem die zeitunkritischen Daten auslesbar sind.

15. Vorrichtung nach Anspruch 12, bei der die Verarbeitungseinheit (10; 100; 1000) eine Speichereinheit (1300) umfasst, in der die übertragenen zeitunkritischen Daten abspeicherbar sind.

## Claims

1. Method for serial data transmission between a position measuring system (20; 200; 200) and a processing unit (10; 100; 1000), in which position data (POS_DAT, POS_DAT') and further data (DAT, DAT') are transmitted in serial form as digital data words from the position measuring system (20; 200; 2000) to the processing unit (10; 100; 1000), **characterised in that**, upon a position request command (POS_RQ, POS_RQ') of the processing unit (10; 100; 1000), current position data (POS_DAT, POS_DAT') are transmitted from the position measuring system (20; 200; 2000) to the processing unit (10; 100; 1000) and, subsequent to the position data (POS_DAT, POS_DAT'), further data (DAT, DAT') are transmitted from the position measuring system (20; 200; 2000) to the processing unit (10; 100; 1000), the processing of which is temporally non-critical, and associated further data (DAT, DAT') are transmitted temporally distributed over a plurality of blocks which follow each other at specific spacings.

2. Method according to claim 1, current position data (POS_DAT, POS_DAT') being transmitted between the blocks with temporally non-critical data (DAT, DAT), which blocks are transmitted temporally distributed.

3. Method according to claim 1, in which parameters of the position measuring system (20; 200; 2000) are transmitted as temporally non-critical data (DAT, DAT').

4. Method according to claim 1, in which temperature measurement values are transmitted as temporally non-critical data (DAT, DAT').

5. Method according to claim 1, in which diagnostic data of the position measuring system (20; 200; 2000) are transmitted as temporally non-critical data (DAT, DAT').

6. Method according to at least one of the preceding claims, in which the data transmitted from the position measuring system (20; 2000) to the processing unit (10; 1000) are transmitted via a first data channel (21; 2100) and the data transmitted from the processing unit (10; 1000) to the position measuring system (20, 2000) are transmitted via a second data channel (11; 1100).

7. Method according to at least one of the preceding claims, in which, for each transmitted data word, an item of identifying information is transmitted.

8. Method according to at least one of the preceding claims, in which temporally non-critical data are read out from a memory component (2300) of the position measuring system (20; 200; 2000).

9. Method according to at least one of the claims 1 - 7, in which the temporally non-critical data transmitted to the processing unit (1000) are stored in a memory unit (1300) of the processing unit (1000).

10. Position measuring system suitable for implementing a method according to one of the claims 1 - 8.

11. Processing unit suitable for implementing a method according to one of the claims 1 - 7 or 9.

12. Device for serial data transmission between a position measuring system (20; 200; 200) and a processing unit (10; 100; 1000), in which transmission of position data (POS_DAT, POS_DAT') and further data (DAT, DAT') is effected in serial form as digital data words from the position measuring system (20; 200; 2000) to the processing unit (10; 100; 1000), **characterised in that** a control unit (2500) is disposed on the part of the position measuring system which, upon a position request command (POS_RQ, POS_RQ') of the processing unit (10; 100; 1000), causes transmission of current position data (POS_DAT; POS_DAT') from the position measuring system (20; 200; 2000) to the processing unit (10; 100; 1000) and, subsequent to the position data (POS_DAT, POS_DAT'), causes the further transmission of data (DAT, DAT') from the position measuring system (20; 200; 2000) to the processing unit (10; 100; 1000), the processing of which is temporally non-critical, and transmission of associated further data (DAT, DAT') being effected temporally distributed over a plurality of blocks which follow each other at specific spacings,

13. Device according to claim 12, in which the transmission of the data transmitted from the position measuring system (20; 2000) to the processing unit (10; 1000) is effected via a first data channel (21; 2100) and the transmission of the data transmitted from the processing unit (10; 1000) to the position measuring system (20, 2000) is effected via a second data channel (11; 1100).

14. Device according to claim 12, in which the position measuring system (20; 200; 2000) comprises a memory component (2300) from which the temporally non-critical data can be read out.

15. Device according to claim 12, in which the processing unit (10; 100; 1000) comprises a memory unit (1300) in which the transmitted, temporally non-critical data can be stored.

## Revendications

1. Procédé pour la transmission sérielle de données entre un système de mesure de position (20; 200; 2000) et une unité de traitement (10; 100; 1000), selon lequel des données de position (POS_DAT, POS_DAT') et des données (DAT, DAT') complémentaires son transmises par le système de mesure de position (20; 200; 2000) à l'unité de traitement (10; 100; 1000) sous une forme sérielle en tant que mots de données numériques, **caractérisé par le fait que**, suite à une requête de position (POS_RQ, POS_RQ') de l'unité de traitement (10; 100; 1000),des données de position (POS_DAT, POS_DAT') actuelles sont transmises par le système de mesure de position (20; 200; 2000) à l'unité de traitement (10; 100; 1000), qu'à la suite des données de position (POS_DAT, POS_DAT'), des données (DAT, DAT') complémentaires, dont le traitement n'est chronologiquement pas critique, sont transmises par le système de mesure de position (20; 200; 2000) à l'unité de traitement (10; 100; 1000) et que des données (DAT, DAT') complémentaires associées sont transmises de manière échelonnée dans le temps en plusieurs blocs qui se suivent à des intervalles prédéfinis.

2. Procédé selon la revendication 1, selon lequel entre les blocs transmis de manière échelonnée dans le temps, qui contiennent des données (DAT, DAT') chronologiquement non critiques, sont transmises des données de position (POS_DAT, POS_DAT') actuelles.

3. Procédé selon la revendication 1, selon lequel les données (DAT, DAT') chronologiquement non critiques transmises sont des paramètres du système de mesure de position (20; 200; 2000).

4. Procédé selon la revendication 1, selon lequel les données (DAT, DAT') chronologiquement non critiques transmises sont des valeurs de mesure de température.

5. Procédé selon la revendication 1, selon lequel les données (DAT, DAT') chronologiquement non critiques transmises sont des données de diagnostic du système de mesure de position (20; 200; 2000).

6. Procédé selon au moins une des revendications précédentes, selon lequel les données transmises par le système de mesure de position (20; 2000) à l'unité de traitement (10; 1000) sont transmises par l'intermédiaire d'un premier canal de données (21; 2100) et les données transmises par l'unité de traitement (10; 1000) au système de mesure de position (20; 2000) sont transmises par l'intermédiaire d'un second canal de données (11; 1100).

7. Procédé selon au moins une des revendications précédentes, selon lequel une information d'identification est transmise pour chaque mot de données transmis.

8. Procédé selon au moins une des revendications précédentes, selon lequel des données chronologiquement non critiques sont lues à partir d'un module de mémoire (2300) du système de mesure de position (20; 200; 2000).

9. Procédé selon au moins une des revendications 1 à 7, selon lequel les données chronologiquement non critiques transmises à l'unité de traitement (1000) sont inscrites dans une unité de mémoire (1300) de l'unité de traitement (1000).

10. Système de mesure de position adapté pour la mise en oeuvre d'un procédé selon une des revendications 1-8.

11. Unité de traitement adaptée pour la mise en oeuvre d'un procédé selon une des revendications 1-7 ou 9.

12. Dispositif pour la transmission sérielle de données entre un système de mesure de position (20; 200; 2000) et une unité de traitement (10; 100; 1000), dans lequel une transmission de données de position (POS_DAT, POS_DAT') et de données (DAT, DAT') complémentaires a lieu du système de mesure de position (20; 200; 2000) vers l'unité de traitement (10; 100; 1000) sous une forme sérielle, en tant que mots de données numériques, **caractérisé par le fait que** côté système de mesure de position (20; 200; 2000) est disposée une unité de commande (2500) qui,sur une requête de position (POS_RQ, POS_RQ') de l'unité de traitement (10; 100; 1000), déclenche une transmission de données de position (POS_DAT, POS_DAT') actuelles du système de mesure de position (20; 200; 2000) à destination de l'unité de traitement (10; 100; 1000) et à la suite des données de position (POS_DAT, POS_DAT'), la transmission complémentaire, du système de mesure de position (20; 200; 2000) vers l'unité de traitement (10; 100; 1000), de données (DAT, DAT'), dont le traitement n'est chronologiquement pas critique, une transmission des données (DAT, DAT') complémentaires associées étant effectuée de manière échelonnée dans le temps en plusieurs blocs qui se suivent à des intervalles prédéfinis.

13. Dispositif selon la revendication 12, dans lequel la transmission des données transmises par le système de mesure de position (20; 2000) à l'unité de traitement (10; 1000) a lieu par l'intermédiaire d'un premier canal de données (21; 2100) et la transmission des données transmises par l'unité de traitement (10; 1000) au système de mesure de position (20; 2000) a lieu par l'intermédiaire d'un second canal de données (11; 1100).

14. le système de mesure de position (20; 200; 2000) comporte un module de mémoire (2300) à partir duquel des données chronologiquement non critiques peuvent être lues.

15. Dispositif selon la revendication 12, dans lequel l'unité de traitement (1000) comporte une unité de mémoire (1300) dans laquelle les données chronologiquement non critiques transmises peuvent être inscrites.
